# EUROPEAN PATENT SPECIFICATION

(11) **EP 2 843 876 B1**
(45) Date of publication and mention of the grant of the patent: **06.07.2016**
(21) Application number: 13782022.1
(22) Date of filing: 27.03.2013
(51) Int. Cl.: H04L 29/06

(54) **METHOD AND DEVICE FOR INSTRUCTING AND IMPLEMENTING COMMUNICATION MONITORING**
VERFAHREN UND VORRICHTUNG ZUR ANWEISUNG UND IMPLEMENTIERUNG VON KOMMUNIKATIONSÜBERWACHUNG
PROCÉDÉ ET DISPOSITIF POUR ORDONNER ET METTRE EN UVRE LA SURVEILLANCE D'UNE COMMUNICATION

(30) Priority: 28.04.2012 CN 201210133881
(43) Date of publication of application: 04.03.2015
(73) Proprietor: ZTE Corporation, Shenzhen, Guangdong 518057 (CN)
(72) Inventor: ZHANG, Lu, Shenzhen Guangdong Province 518057 (CN); GAO, Yang, Shenzhen Guangdong Province 518057 (CN)
(74) Representative: Novagraaf Technologies
(86) International application number: PCT/CN2013/073269
(87) International publication number: WO 2013/159623

(56) References cited:
- EP-A1- 2 247 031
- WO-A1-2004/091250
- WO-A1-2010/088963
- CN-A- 1 983 950
- CN-A- 101 322 384
- CN-A- 102 647 311

## Description

### TECHNICAL FIELD

The present invention relates to the field of communications, in particular to a method and device for instructing and implementing communication monitoring.

### BACKGROUND

Lawful monitoring refers to a security mechanism monitoring a certain user or a certain communication process out of the need of law enforcements, and the lawful monitoring includes two levels of monitoring: the signalling and content.

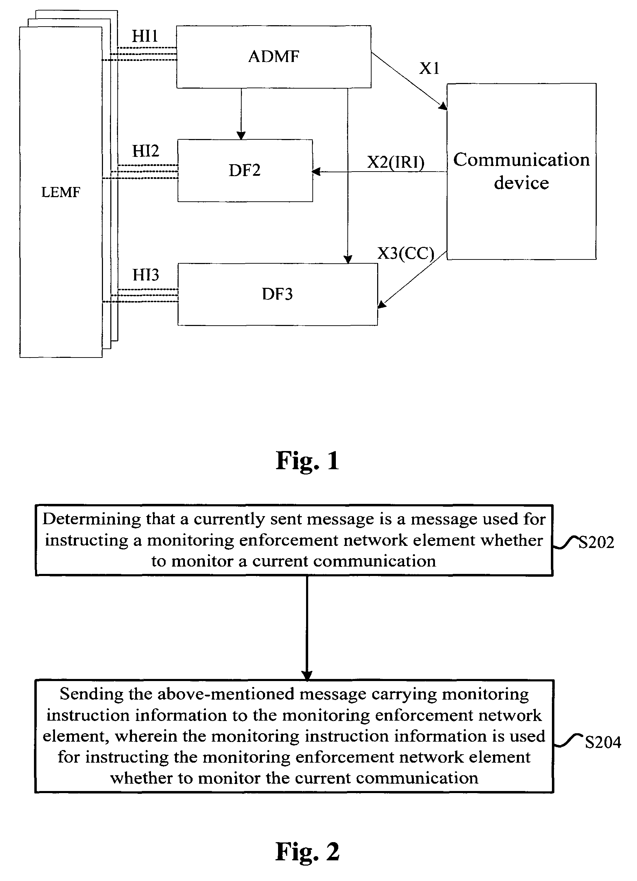

Fig. 1 is a schematic diagram of a monitoring system of the European Telecommunication Standards Institute (ETSI) according to the relevant art. The monitoring system includes:
at least one law enforcement monitoring facility (LEMF), which is an initial originator of the monitoring, and implements the monitoring of the signalling and content of a designated user by collecting monitoring data;
an administration function (ADMF), which is used for dynamically configuring a monitored user, coordinating an interaction with a plurality of law enforcement monitoring facilities (LEMFs), and controlling behaviours of a delivery function;
a delivery function (DF), which is a data transfer entity of the lawful monitoring, and is used for transferring relevant data of the monitored user to the LEMF;
and at least one communication device, which may be a mobile service switch center (MSC), a media gateway (MGW), or a gateway GPRS support Node (GGSN), etc.

The monitoring data can be classified into: 1) interception related information (IRI), which refers to monitoring information at a signalling layer; and 2) interception communication content (CC), which refers to the monitoring information at a media layer. Since the monitoring data are divided into the IRI and the CC, the corresponding DF is also divided into DF2 and DF3, which are used for transferring the IRI and the CC respectively.

There are three handover interfaces (HIs) between the LEMF and the ADMF, and between the LEMF and the DF. Handover interface port 1 (HI1) is mainly responsible for managing and maintaining information. Handover interface port 2 (HI2) is mainly responsible for reporting a signalling message and event information to a monitoring center. Handover interface port 3 (HI3) is mainly responsible for reporting user plane media information to the monitoring center. The following description is not represented in Fig. 1. There are interfaces X1 and X2 between the ADMF and the Call Session Control Function (CSCF) and between the ADMF and the Application Server (AS), wherein the interface X1 is responsible for managing and maintaining information; and the interface X2 is used for the CSCF and AS reporting signalling information and event message. There is an interface X3 between the DF3 and an Access Border Gateway Function (A-BGF), wherein the interface X3 is used for the A-BGF reporting the user plane media information to the DF3.

The IMS related monitoring solutions in the relevant art are generally divided into two categories.

The first category is centralized monitoring. A dedicated monitoring network element (for example, monitoring AS) coordinates with a dedicated media resource (for example, media resource function (MRF)) to implement the centralized monitoring. According to a static configuration strategy of an operator, when judging that it is required to monitor a target user, a call is triggered to the dedicated monitoring network element; the dedicated monitoring network element interacts with the dedicated media resource, obtains a monitoring media resource, and controls the media connections of subsequent users to pass through a designated monitoring media resource; and the dedicated media resource copies tasks to a media stream of the monitoring center.

The second category is distributed monitoring. According to the requirements of specifications 3GPP TS 32.106 and 3GPP TS 32.107 R11, media copying is implemented at a network boundary of an IMS, for example, through a gateway support node (GSN), and this monitoring mode is called the distributed monitoring.

In the lawful monitoring, there is an application scenario that monitoring control information needs to be transferred. For example, in a call-forwarding service, when user B is monitored and the calls to the user B are subscribed to be unconditionally forwarded to user C, when user A calls the user B, the call will be forwarded to the user C, and the final two communication parties are A and C. Since the user B does not participate in a specific communication, a boundary network element to which the user B belongs cannot perform monitoring media copying. In order to implement the purpose of monitoring this communication, relevant network elements (Proxy-CSCF (P-CSCF), Serving-CSCF (S-CSCF), AS, etc.) of the user A and the user C are notified to monitor this path of call. At the moment, additional SIP messages would be used or particular instruction information would be contained in the existing SIP messages, such that a monitored call and an unmonitored call are different in signalling, as a result, whether the user is monitored or not would be easily found by special populations, such as operator maintenance personnel, and a hidden security risk exists.

Although the monitoring control information can be encrypted by using an encryption method, the special populations such as the operation and maintenance personnel can still use a contrast method, a method for checking whether relevant information in the SIP messages increases to judge whether particular personnel is monitored, thereby bring a certain hidden security risk.

D1 (WO 2010/088963 A1) discloses a method of configuring a messaging gateway to operate as an Intercepting Control Element or a Data Retention source, D2 (EP 2247031 A1) discloses an implementation method of IMS interception, a system and a device thereof which method ensures that users accessing the IMS network in various modes can implement the centralized interception of the media on an IMS core without requirement for access side equipment or an extended private interface between the IMS core and the access side equipment, D3 (WO 2004/091250 A1) discloses a method of performing lawful interception of a multimedia call between two or more terminals, D4 (CN1983950 A) discloses a monitoring method, which can ensure the monitoring in the fixed network applying field and meet the regulation of ETSI/3GPP at the same time; and D5 (CN 101322384 A) discloses a method for passing control messages and other information through a SIP network by embedding the information in SIP messages. D1, D2, D3, D4 and D5 provide respective technical solutions; however, the above mentioned problem still remains unsolved.

### SUMMARY

In view of the problem in the relevant art that since the monitoring enforcement network element is instructed to monitor the communication by increasing a particular message or increasing the monitoring instruction information in the existing message, so that it is possible to judge whether the communication is monitored by comparing sent messages, thereby influencing the security of monitoring, a method and device for instructing and implementing communication monitoring are provided, so as to at least solve the above-mentioned problem.

According to one embodiment of the present invention, provided is a method for instructing communication monitoring in an IMS system, including: determining by a determination component that a currently sent message is a message used for instructing a monitoring enforcement network element whether to monitor a current communication; and sending by a sending component the message carrying monitoring instruction information to the monitoring enforcement network element, wherein the monitoring instruction information is used for instructing the monitoring enforcement network element whether to monitor the current communication.

In the described embodiment, before sending the message carrying the monitoring instruction information to the monitoring enforcement network element, the method further includes: encrypting the monitoring instruction information.

In the described embodiment, encrypting the monitoring instruction information includes: hiding the monitoring instruction information in a sequence representing the monitoring instruction information.

In the described embodiment, hiding the monitoring instruction information in the sequence representing the monitoring instruction information includes: randomly determining a position of the monitoring instruction information in the sequence representing the monitoring instruction information; and carrying the monitoring instruction information in the determined position.

In the described embodiment, after carrying the monitoring instruction information in the determined position, the method further includes: carrying random characters in other positions of the sequence representing the monitoring instruction information.

In the described embodiment, the message further carries monitoring control information, wherein the monitoring control information includes: a destination IP address of monitoring media copying and a port number of the monitoring media copying; and randomly determining the position of the monitoring instruction information in the sequence representing the monitoring instruction information includes: determining the position of the monitoring instruction information in the sequence representing the monitoring instruction information according to the port number.

In the described embodiment, determining that the currently sent message is a message used for instructing the monitoring enforcement network element whether to monitor the current communication includes: judging whether the currently sent message is pre-defined one or more messages used for instructing the monitoring enforcement network element whether to monitor the current communication, if yes, then determining that the currently sent message is a message used for instructing the monitoring enforcement network element whether to monitor the current communication; or judging whether the currently sent message is a message used for transferring monitoring control information and required to be sent in all communications, if yes, then determining that the currently sent message is a message used for instructing the monitoring enforcement network element whether to monitor the current communication.

According to another embodiment of the present invention, provided is a method for implementing communication monitoring in an IMS system, including: a monitoring enforcement network element receiving a message carrying monitoring instruction information, wherein the monitoring instruction information is used for instructing the monitoring enforcement network element whether to monitor current communication; the monitoring enforcement network element judging whether the monitoring instruction information instructs to monitor the current communication; and if yes, the monitoring enforcement network element monitoring the current communication.

In the described embodiment, before the monitoring enforcement network element judging whether the monitoring instruction information instructs to monitor the current communication, the method further includes: the monitoring enforcement network element decrypting the received message carrying the monitoring instruction information to obtain the monitoring instruction information.

In the described embodiment, the monitoring enforcement network element decrypting the received message carrying the monitoring instruction information to obtain the monitoring instruction information includes: the monitoring enforcement network element determining a position of the monitoring instruction information in a sequence representing the monitoring instruction information to obtain the monitoring instruction information from the determined position.

In the described embodiment, the message further carries monitoring control information, wherein the monitoring control information includes: a destination IP address of monitoring media copying and a port number of the monitoring media copying; and the monitoring enforcement network element determining the position of the monitoring instruction information in the sequence representing the monitoring instruction information to obtain the monitoring instruction information from the determined position includes: the monitoring enforcement network element determining the position of the monitoring instruction information in the sequence representing the monitoring instruction information according to the port number to obtain the monitoring instruction information from the determined position.

According to still another embodiment of the present invention, provided is a device for instructing communication monitoring in an IMS system, including: a determination component, which is configured to determine that a currently sent message is a message used for instructing a monitoring enforcement network element whether to monitor a current communication; and a sending component, which is configured to send the message carrying monitoring instruction information to the monitoring enforcement network element, wherein the monitoring instruction information is used for instructing the monitoring enforcement network element whether to monitor the current communication.

In the described embodiment, the device further includes: an encryption component, which is configured to encrypt the monitoring instruction information before the sending component sends the message carrying the monitoring instruction information to the monitoring enforcement network element.

In the described embodiment, the encryption component encrypts the monitoring instruction information according to the following method: hiding the monitoring instruction information in a sequence representing the monitoring instruction information.

In the described embodiment, the encryption component includes: a determination unit, which is configured to randomly determine a position of the monitoring instruction information in the sequence representing the monitoring instruction information; and a carrying unit, which is configured to carry the monitoring instruction information in the determined position.

In the described embodiment, the determination component includes: a first determination unit, which is configured to judge whether the currently sent message is pre-defined one or more messages used for instructing the monitoring enforcement network element whether to monitor the current communication, if yes, then determine that the currently sent message is a message used for instructing the monitoring enforcement network element whether to monitor the current communication; and a second determination unit, which is configured to judge whether the currently sent message is a message used for transferring monitoring control information and required to be sent in all communications, if yes, then determine that the currently sent message is a message used for instructing the monitoring enforcement network element whether to monitor the current communication.

According to still another embodiment of the present invention, provided is a device for implementing communication monitoring in an IMS system, including: a reception component, which is configured to receive a message carrying monitoring instruction information, wherein the monitoring instruction information is used for instructing a monitoring enforcement network element whether to monitor a current communication; a judgement component, which is configured to judge whether the monitoring instruction information instructs to monitor the current communication; and a monitoring component, which is configured to monitor the current communication when a judgement result of the judgement component is yes.

In the described embodiment, the device further includes: a decryption component, which is configured to decrypt the message which carries the monitoring instruction information and is received by the reception component to obtain the monitoring instruction information.

Through the embodiments of the present invention, after it is determined that the currently sent message is a message used for instructing the monitoring enforcement network element whether to monitor the current communication, the monitoring instruction information used for instructing the monitoring enforcement network element whether to monitor the current communication is carried in the above-mentioned message, so that no matter the monitoring is required or not, the message used for instructing the monitoring enforcement network element whether to monitor the current communication contains the monitoring instruction information, and a difference between monitored communication and unmonitored communication can not be identified, a hidden security risk in existing monitoring is eliminated, and a communication monitoring function can be better implemented.

### BRIEF DESCRIPTION OF THE DRAWINGS

Drawings, provided for further understanding of the present invention and forming a part of the specification, are used to explain the present invention together with embodiments of the present invention rather than to limit the present invention. In the accompanying drawings:
Fig. 1 is a schematic diagram of a monitoring system of the European Telecommunication Standards Institute according to the relevant art;
Fig. 2 is a flowchart of a method for instructing communication monitoring according to an embodiment of the present invention;
Fig. 3 is a schematic diagram of a device for instructing communication monitoring according to an embodiment of the present invention;
Fig. 4 is a schematic diagram of an example device for instructing communication monitoring according to an embodiment of the present invention;
Fig. 5 is a schematic diagram of another example device for instructing communication monitoring according to an embodiment of the present invention;
Fig. 6 is a flowchart of a method for implementing communication monitoring according to an embodiment of the present invention;
Fig. 7 is a schematic diagram of a device for implementing communication monitoring according to an embodiment of the present invention;
Fig. 8 is a schematic diagram of an example device for implementing communication monitoring according to an embodiment of the present invention;
Fig. 9 is a schematic diagram of a lawful monitoring system according to an embodiment of the present invention;
Fig. 10 is a flowchart of a method for implementing lawful monitoring according to an embodiment of the present invention;
Fig. 11 is a signalling flowchart of lawful monitoring when the monitoring is required according to the relevant art;
Fig. 12 is a signalling flowchart of lawful monitoring when the monitoring is not required according to the relevant art;
Fig. 13 is a signalling flowchart of lawful monitoring when the monitoring is required according to an embodiment of the present invention;
Fig. 14 is a signalling flowchart of lawful monitoring when the monitoring is not required according to an embodiment of the present invention;
Fig. 15 is a signalling flowchart of lawful monitoring when the monitoring is required in the case that a particular message head is used to transfer monitoring instruction information according to an embodiment of the present invention;
Fig. 16 is a signalling flowchart of lawful monitoring when the monitoring is not required in the case that an extension head of an SIP message is used to carry monitoring instruction information according to an embodiment of the present invention;
Fig. 17 is a signalling flowchart of lawful monitoring when the monitoring is required in the case that an existing head of an SIP message is used to carry monitoring instruction information according to an embodiment of the present invention; and
Fig. 18 is a signalling flowchart of lawful monitoring when the monitoring is not required in the case that an existing head of an SIP message is used to carry monitoring instruction information according to an embodiment of the present invention.

### DEAILED DESCRIPTION OF EMBODIMENTS

The present invention is described below with reference to the accompanying drawings and embodiments in detail. Note that, the embodiments of the present application and the features of the embodiments can be combined with each other if there is no conflict.

### Embodiment I

According to an embodiment of the present invention, a method for instructing communication monitoring is provided, so that a difference between monitored communication and unmonitored communication can not be identified, a hidden security risk in existing monitoring is eliminated, and a communication monitoring function can be better implemented.

Fig. 2 is a flowchart of a method for instructing communication monitoring according to an embodiment of the present invention. As shown in Fig. 2, the method includes the following steps (step S202-step S204).

Step S202, a currently sent message is determined to be a message used for instructing a monitoring enforcement network element whether to monitor a current communication.

Step S204, the above-mentioned message carrying monitoring instruction information is sent to the monitoring enforcement network element, wherein the monitoring instruction information is used for instructing the monitoring enforcement network element whether to monitor the current communication.

Through the embodiment of the present invention, after it is determined that the currently sent message is a message used for instructing the monitoring enforcement network element whether to monitor the current communication, the monitoring instruction information used for instructing the monitoring enforcement network element whether to monitor the current communication is carried in the above-mentioned message, so that no matter the monitoring is required or not, the message used for instructing the monitoring enforcement network element whether to monitor the current communication contains the monitoring instruction information. In this way, a difference between monitored communication and unmonitored communication can not be identified, a hidden security risk in existing monitoring is eliminated, and a communication monitoring function is better implemented.

In an example implementation of the embodiment of the present invention, the currently sent message may be determined to be a message used for instructing the monitoring enforcement network element whether to monitor the current communication in the following manner: it is judged whether the currently sent message is pre-defined one or more messages used for instructing the monitoring enforcement network element whether to monitor the current communication, if yes, then it is determined that the currently sent message is a message used for instructing the monitoring enforcement network element whether to monitor the current communication. Alternatively, the currently sent message may be determined to be a message used for instructing the monitoring enforcement network element whether to monitor the current communication in the following manner: it is judged whether the currently sent message is a message used for transferring monitoring control information and required to be sent in all communications, if yes, then it is determined that the currently sent message is a message used for instructing the monitoring enforcement network element whether to monitor the current communication.

For example, in the relevant art, before or after the communication is established, a particular message is used to carry the monitoring instruction information, or a message in a communication establishment process is used to carry the monitoring instruction information in a head or an extension head thereof. For the situation of using the particular message to carry the monitoring instruction information, the particular message may also be sent when the communication is not monitored, carrying the monitoring instruction information in the particular message to instruct the monitoring enforcement network element whether to monitor the communication. It is judged whether the currently sent message is a message used for transferring monitoring control information and required to be sent in all communications, if yes, then it is determined that the currently sent message is a message used for instructing the monitoring enforcement network element whether to monitor the current communication. For the situation of using the message in a communication establishment process to carry the monitoring instruction information in a head or an extension head thereof, it is judged whether the currently sent message is pre-defined one or more messages used for instructing the monitoring enforcement network element whether to monitor the current communication, if yes, then it is determined that the currently sent message is a message used for instructing the monitoring enforcement network element whether to monitor the current communication.

In the embodiment of the present invention, no matter the monitoring is required or not, the monitoring instruction information is increased in the message used for instructing the monitoring enforcement network element whether to monitor the current communication, to instruct the monitoring enforcement network element whether to monitor the communication, so that the particular personnel cannot determine whether the communication is monitored by contrasting whether to send the particular message or whether there is increased information in the message. In an example implementation of the embodiment of the present invention, in order to further avoid the particular personnel analysing the monitoring instruction information in the message to judge whether to monitor the communication, before sending a message carrying the monitoring instruction information to the monitoring enforcement network element, the monitoring instruction information may also be encrypted.

When the monitoring instruction information is encrypted, the monitoring instruction information may be encoded to convert plaintext instruction information into cipher text; or the monitoring instruction information may also be hidden; or the monitoring instruction information is camouflaged, etc. In an example implementation of the embodiment of the present invention, the monitoring instruction information may be hidden in a sequence representing the monitoring instruction information. For example, carrying random characters in other positions, except for a representation position of the monitoring instruction information, of the sequence representing the monitoring instruction information, so as to enable the randomness of the head of the message, thereby hiding the monitoring instruction information.

Furthermore, in an example implementation of the embodiment of the present invention, a position of the monitoring instruction information in the sequence representing the monitoring instruction information may be randomly determined according to preliminary definitions of a monitoring initiation network element and the monitoring enforcement network element, and the monitoring instruction information is carried in the determined position, so as to enable the monitoring instruction information to have undetermined positions in the sequence representing the monitoring instruction information, thereby hiding the monitoring instruction information. In the described embodiment, random characters may also be carried in other positions of the sequence representing the monitoring instruction information. For example, when the monitoring initiation network element sends a message, a random number (which is not greater than the length of a sequence representing the monitoring instruction information) is generated as a position of the monitoring instruction information in the sequence, and the random number is carried in the sequence. After the monitoring enforcement network element receives the message, the above-mentioned random number is obtained in the determined position, and the monitoring instruction information is obtained in the position of the above-mentioned sequence which is indicated by the random number.

In an example implementation of the embodiment of the present invention, monitoring control information is also carried in the above-mentioned message, and the monitoring control information may include but not limit to: a destination IP address of monitoring media copying and a port number of the monitoring media copying. In this case, when a position of the monitoring instruction information in the sequence representing the monitoring instruction information is determined, the position of the monitoring instruction information in the sequence representing the monitoring instruction information may be determined according to the port number of the monitoring media copying, and the monitoring instruction information is carried in the determined position. Furthermore, after the monitoring instruction information is carried in the determined position, the random characters may also be carried in other positions of the sequence representing the monitoring instruction information, so that values of the sequence representing the monitoring instruction information have the randomness, thereby avoiding the particular personnel judging whether to monitor the communication by analysing the monitoring instruction information in the message, and enhancing the security of communication monitoring.

For example, control information of the monitoring media copying is carried in an SIP message body, wherein the control information includes the destination IP address and port information of the media copying. A character string composed of 16 letters is used at an SIP extension head X-Indication, and the monitoring instruction is placed therein. For example, "a port in the SIP message body" modulo 16 may get a value in the range of 0-15, which then serves as a position for depositing the monitoring instruction, a letter B is used as an instruction that an ordinary call is not monitored, and other 15 letters may be random letter combination of {0-9}, {a-z} and {A-Z}.

In the embodiment of the present invention, the monitoring enforcement network element may receive a message carrying the monitoring instruction information, and judge the monitoring instruction information carried in the message whether to instruct the monitoring enforcement network element to monitor the current communication, if yes, the monitoring enforcement network element monitors the current communication. The above-mentioned message carries encrypted monitoring instruction information, and before the monitoring enforcement network element judges whether the monitoring instruction information carried in the message instructs the monitoring enforcement network element to monitor the current communication, the received message carrying the monitoring instruction information may also be decrypted to obtain the monitoring instruction information.

According to the embodiment of the present invention, a device for instructing communication monitoring is also provided, which is used for implementing the method provided in the embodiment of the present invention.

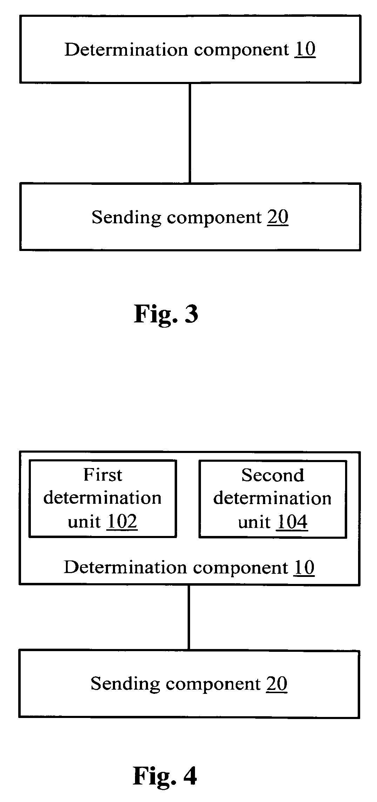

Fig. 3 is a schematic diagram of a device for instructing communication monitoring according to an embodiment of the present invention. As shown in Fig. 3, the device mainly includes: a determination component **10** and a sending component **20.** The determination component **10** is configured to determine that a currently sent message is a message used for instructing a monitoring enforcement network element whether to monitor current communication; and the sending component **20** is coupled to the determination component **10** and is configured to send the above-mentioned message carrying monitoring instruction information to the monitoring enforcement network element, wherein the monitoring instruction information is used for instructing the monitoring enforcement network element whether to monitor the current communication.

Through the embodiment of the present invention, after the determination component **10** determines that the currently sent message is a message used for instructing the monitoring enforcement network element whether to monitor the current communication, the sending component **20** carries the monitoring instruction information used for instructing the monitoring enforcement network element whether to monitor the current communication in the above-mentioned message and sends same to the monitoring enforcement network element. No matter the monitoring is required or not, the message used for instructing the monitoring enforcement network element whether to monitor the current communication contains the monitoring instruction information, therefore a difference between monitored communication and unmonitored communication can not be identified, a hidden security risk in existing monitoring is eliminated, and a communication monitoring function can be better implemented.

In an example implementation of the embodiment of the present invention, as shown in Fig. 4, the determination component **10** may include: a first determination unit **102**, which is configured to judge whether the currently sent message is pre-defined one or more messages used for instructing the monitoring enforcement network element whether to monitor the current communication, if yes, then determine that the currently sent message is a message used for instructing the monitoring enforcement network element whether to monitor the current communication; and a second determination unit **104**, which is configured to judge whether the currently sent message is a message used for transferring monitoring control information and required to be sent in all communications, if yes, then determine that the currently sent message is a message used for instructing the monitoring enforcement network element whether to monitor the current communication.

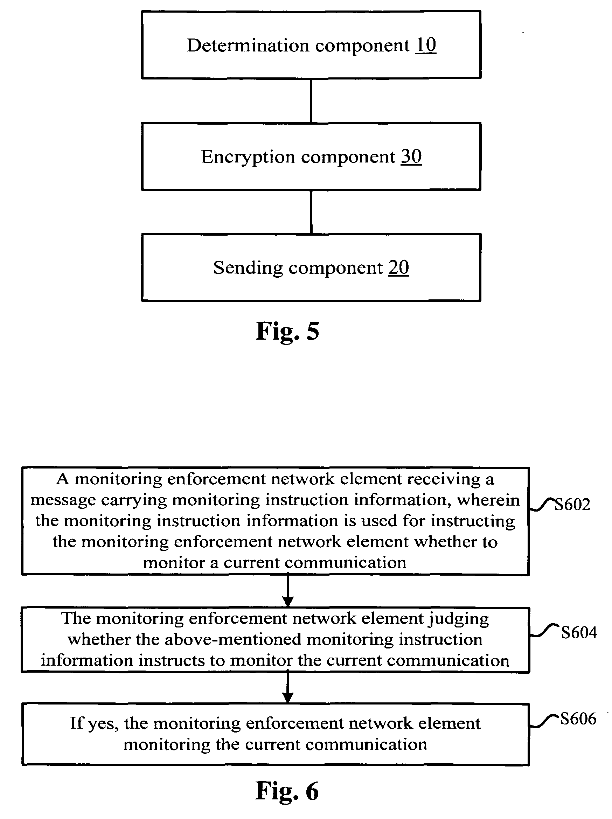

In order to further avoid the particular personnel analysing the monitoring instruction information in the message to judge whether to monitor the communication, before sending a message carrying the monitoring instruction information to the monitoring enforcement network element, the monitoring instruction information may also be encrypted. Therefore, in an example implementation of the embodiment of the present invention, as shown in Fig. 5, the above-mentioned device can further include: an encryption component **30**, which is coupled to the determination component **10** and the sending component **20** and is configured to encrypt the monitoring instruction information before the sending component **20** sends the message carrying monitoring instruction information to the monitoring enforcement network element.

When the encryption component **30** encrypts the monitoring instruction information, the monitoring instruction information can be encoded to convert plaintext instruction information into cipher text; or the monitoring instruction information may also be hidden; or the monitoring instruction information is camouflaged, etc. In an example implementation of the embodiment of the present invention, when the encryption component **30** encrypts the monitoring instruction information, the monitoring instruction information may be hidden in a sequence representing the monitoring instruction information. For example, random characters are carried in other positions, except for a representation position of the monitoring instruction information, of the sequence representing the monitoring instruction information, so as to enable the randomness of the head of the message, thereby hiding the monitoring instruction information.

In the described embodiment, a position of the monitoring instruction information in the sequence representing the monitoring instruction information may be randomly determined according to preliminary definitions of a monitoring initiation network element and the monitoring enforcement network element, and the monitoring instruction information is carried in the determined position. In this way, the monitoring instruction information may have undetermined positions in the sequence representing the monitoring instruction information, thereby hiding the monitoring instruction information. In the described embodiment, the random characters may also be carried in other positions of the sequence representing the monitoring instruction information. Therefore, in an example implementation of the embodiment of the present invention, the encryption component **30** may include: a determination unit, which is configured to determine a position of the monitoring instruction information in the sequence representing the monitoring instruction information; and a carrying unit, which is configured to carry the monitoring instruction information in the determined position. Furthermore, after carrying the monitoring instruction information in the determined position, random characters may also be carried in other positions of the sequence representing the monitoring instruction information.

In another example implementation of the embodiment of the present invention, monitoring control information is also carried in the above-mentioned message, and the monitoring control information may include but not limit to: a destination IP address of monitoring media copying and a port number of the monitoring media copying. In this case, when the encryption component **30** encrypts the monitoring control information, the position of the monitoring instruction information in the sequence representing the monitoring instruction information may be determined according to the port number of the monitoring media copying, and the monitoring instruction information is carried in the determined position. Furthermore, after the monitoring instruction information is carried in the determined position, random characters may also be carried in other positions of the sequence representing the monitoring instruction information, so that values of the sequence representing the monitoring instruction information have the randomness, thus avoiding the particular personnel judging whether to monitor the communication by analysing the monitoring instruction information in the message, and enhancing the security of communication monitoring.

### Embodiment II

According to an embodiment of the present invention, a method for implementing communication monitoring is provided in combination with the method for instructing communication monitoring in embodiment I, and the communication monitoring with high security is implemented.

Fig. 6 is a flowchart of a method for implementing communication monitoring according to an embodiment of the present invention. As shown in Fig. 6, the method may include the following steps (step S602-step S606).

Step S602, a monitoring enforcement network element receives a message carrying monitoring instruction information, wherein the monitoring instruction information is used for instructing the monitoring enforcement network element whether to monitor the current communication.

Step S604, the monitoring enforcement network element judges whether the above-mentioned monitoring instruction information instructs to monitor a communication.

Step S606, if yes, the monitoring enforcement network element monitors the current communication.

Through the embodiment of the present invention, the monitoring enforcement network element receives the message carrying the monitoring instruction information used for instructing the monitoring enforcement network element whether to monitor the current communication and judges whether the monitoring instruction information instructs to monitor the current communication, if yes, then the monitoring enforcement network element monitors the communication, and the communication monitoring with high security is implemented.

In order to further avoid the particular personnel judging whether to monitor the communication by analysing the monitoring instruction information in the message, the monitoring instruction information may also be encrypted before the message carrying the monitoring instruction information is sent to the monitoring enforcement network element, that is, the monitoring instruction information carried in the message is encrypted monitoring instruction information. Therefore, in an example implementation of the embodiment of the present invention, before judging whether the monitoring instruction information instructs to monitor the current communication, the monitoring enforcement network element may also decrypt the received message carrying the monitoring instruction information to obtain the monitoring instruction information.

In the embodiment of the present invention, when the received message carrying the monitoring instruction information is decrypted, a method matching with the encryption method provided in the above-mentioned embodiment of the present invention is adopted. In an example implementation of the embodiment of the present invention, a monitoring initiation network element randomly determines a position of the monitoring instruction information in the sequence representing the monitoring instruction information according to preliminary definitions of the monitoring initiation network element and the monitoring enforcement network element, and carries the monitoring instruction information in the determined position. The monitoring enforcement network element may determine the position of the monitoring instruction information in the sequence representing the monitoring instruction information and obtain the monitoring instruction information from the determined position.

In the described embodiment, when the monitoring initiation network element encrypts the monitoring control information, the position of the monitoring instruction information in the sequence representing the monitoring instruction information can be determined according to the port number of the monitoring media copying, and the monitoring instruction information is carried in the determined position. Furthermore, after the monitoring instruction information is carried in the determined position, random characters may also be carried in other positions of the sequence representing the monitoring instruction information, so that values of the sequence representing the monitoring instruction information have the randomness, thus avoiding the particular personnel from judging whether to monitor the communication by analysing the monitoring instruction information in the message, and enhancing the security of communication monitoring. Therefore, in an example implementation of the embodiment of the present invention, the monitoring control information may be carried in the message received by the monitoring enforcement network element, and the monitoring control information may include a destination IP address of monitoring media copying and a port number of the monitoring media copying. When the monitoring enforcement network element decrypts the received message carrying the monitoring instruction information to obtain the monitoring instruction information, the position of the monitoring instruction information in the sequence representing the monitoring instruction information can be determined according to the port number to obtain the monitoring instruction information from the determined position.

According to the embodiment of the present invention, a device for implementing communication monitoring is also provided, which is used for implementing the method for implementing communication monitoring provided in the embodiment of the present invention.

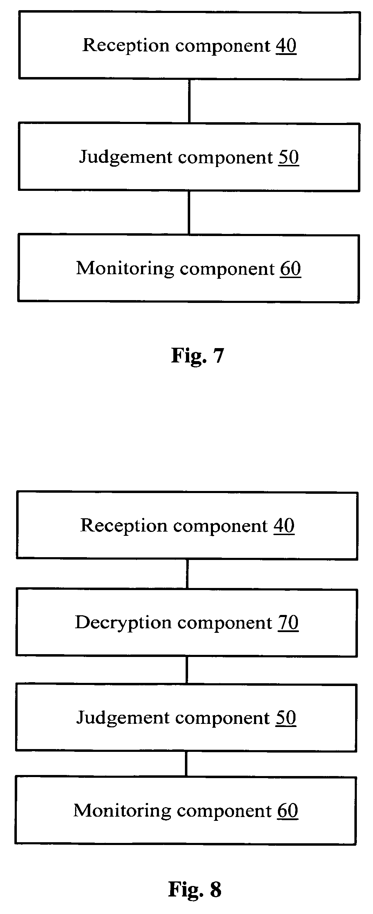

Fig. 7 is a schematic diagram of a device for implementing communication monitoring according to an embodiment of the present invention. As shown in Fig. 7, the device mainly includes: a reception component **40**, a judgement component **50** and a monitoring component **60.** The reception component is configured to receive a message carrying the monitoring instruction information, wherein the monitoring instruction information is used for instructing the monitoring enforcement network element whether to monitor the current communication; the judgement component **50** is coupled to the reception component **40** and is configured to judge whether the above-mentioned monitoring instruction information instructs to monitor the current communication; and the monitoring component **60** is coupled to the judgement component **50** and is configured to monitor the communication when a judgement result of the judgement component **50** is yes.

Through the embodiment of the present invention, the reception component **40** receives the message carrying the monitoring instruction information used for instructing the monitoring enforcement network element whether to monitor the current communication, and the judgement component **50** judges whether the monitoring instruction information instructs to monitor the current communication, if yes, then the monitoring component **60** monitors the current communication, and the communication monitoring with high security is implemented.

In order to further avoid the particular personnel from judging whether to monitor the communication by analysing the monitoring instruction information in the message, the monitoring instruction information may also be encrypted before the message carrying the monitoring instruction information is sent to the monitoring enforcement network element, that is, the monitoring instruction information carried in the message is encrypted monitoring instruction information. Therefore, in an example implementation of the embodiment of the present invention, as shown in Fig. 8, the above-mentioned device may further include: a decryption component **70**, which is coupled to the reception component **40** and the judgement component **50** and is configured to decrypt the message carrying the monitoring instruction information which is received by the reception component **40** to obtain the monitoring instruction information.

When the monitoring initiation network element encrypts the monitoring control information, the position of the monitoring instruction information in the sequence representing the monitoring instruction information may be determined according to the port number of the monitoring media copying, and the monitoring instruction information is carried in the determined position. Furthermore, after the monitoring instruction information is carried in the determined position, random characters may also be carried in other positions of the sequence representing the monitoring instruction information, so that values of the sequence representing the monitoring instruction information have the randomness, thus avoiding the particular personnel from judging whether to monitor the communication by analysing the monitoring instruction information in the message, and enhancing the security of communication monitoring.

Therefore, in an example implementation of the embodiment of the present invention, the monitoring control information may be carried in the message received by the reception component **40**, and the monitoring control information may include a destination IP address of monitoring media copying and a port number of the monitoring media copying. When the decryption component **70** decrypts the received message carrying the monitoring instruction information to obtain the monitoring instruction information, the position of the monitoring instruction information in the sequence representing the monitoring instruction information may be determined according to the port number to obtain the monitoring instruction information from the determined position.

### Embodiment III

IP multimedia subsystem (IMS) is a development direction of the multimedia communication in the future, and is also the most important component of the next generation network. It is a subsystem which supports an IP multimedia service and is proposed in the third generation partnership project (3GPP), and an obvious feature thereof is using a session initial protocol (SIP) system, the communication being irrelevant to an access mode, and having a plurality of capabilities such as the separation of control functions and bearing capabilities of a plurality of multimedia services, the separation of calls and sessions, the separation of applications and services, the separation of services and networks and the integration of mobile network and Internet services.

In an IMS architecture, call session control function (CSCF) entity is a core function entity of the IMS, and is mainly used for realizing call and session control of the IMS. Three CSCF entities are defined in the IMS: a proxy-CSCF (P-CSCF) entity, an interrogating CSCF (I-CSCF) entity and a serving-CSCF (S-CSCF) entity. Main functions of the S-CSCF are receiving user registration, and downloading user-related data from a home subscriber server (HSS) and temporarily storing same; redirecting routing, and performing call session control; and triggering a user signing service, and cooperating with a service platform to perform service support, etc. An HSS entity in the IMS is mainly responsible for storing user signing information, position information, etc. An application server (AS) entity in the IMS provides service logic to a user, including traditional telephone services such as call forwarding, call transfer and conferences, and emerging service functions such as instant messages and file transmission. In the embodiment of the present invention, taking the lawful monitoring for the IMS network for example, the method provided in the above-mentioned embodiment of the present invention is specifically explained. In order to solve the problem that in an existing IMS lawful monitoring process, when network elements use an SIP protocol to transfer monitoring control information therebetween, a hidden security risk that the operator maintenance personnel can easily identify the monitoring instruction may exist, on the basis of the standards 3GPP TS 33.106 and 3GPP TS 33.107, information hiding is performed on the monitoring control information transferred between various network elements, so as to eliminate the hidden security risk brought due to the fact that features of the current monitoring control information are too obvious.

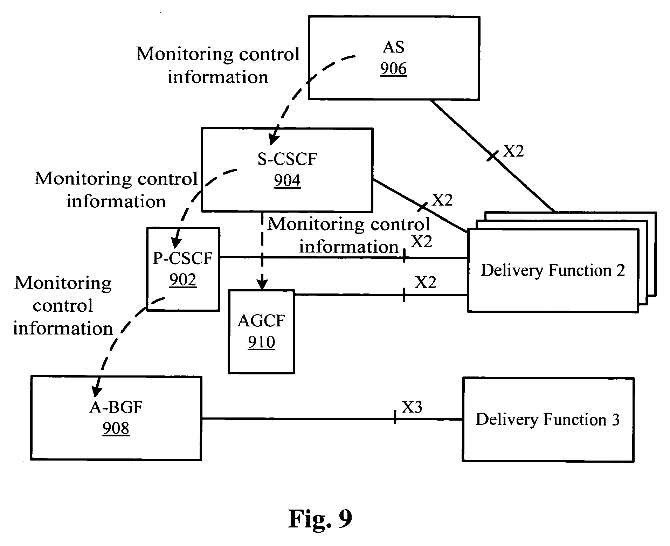

Fig. 9 is a schematic diagram of a lawful monitoring system according to an embodiment of the present invention. In the lawful monitoring system for the IMS network as shown in Fig. 9, the following network elements are mainly included:
P-CSCF **902**, which is set as an SIP proxy server between an IMS terminal and the IMS network, and is responsible for the access of the SIP terminal, the security protection, the compression and decompression of an SIP message, etc. In the embodiment of the present invention, the P-CSCF **902** can be taken as a monitoring implementation network element (that is, a monitoring enforcement network element). When being taken as the monitoring implementation network element, the P-CSCF **902** supports performing parsing processing on the received monitoring control information after information hiding, and implementing monitoring operation.

S-CSCF **904**, which is responsible for functions such as call route, service triggering and authorization. In the embodiment of the present invention, the S-CSCF **904** can be taken as the monitoring implementation network element. When being taken as the monitoring implementation network element, the P-CSCF **904** supports performing parsing processing on the received monitoring control information after information hiding, and implementing monitoring operation.

AS **906**, which is responsible for realizing providing the user with service functions. In the embodiment of the present invention, the AS **906** can be taken as a monitoring initiation network element and the monitoring implementation network element. When being taken as the monitoring initiation network element and the monitoring implementation network element, the AS **906** supports performing information hiding on the monitoring control information and performing parsing processing on the received monitoring control information, and implementing monitoring operation.

Access border gateway function (A-BGF) **908**, which is configured to provide network address conversion of signalling and media streams between a terminal and a service providing network in the architecture of a fixed network access IMS. In the embodiment of the present invention, the A-BGF **908** can be taken as the monitoring implementation network element. When being taken as the monitoring implementation network element, the A-BGF **908** supports performing parsing processing on the received monitoring control information after information hiding, and implementing monitoring operation.

Access gateway control function (AGCF) **910**, which is configured to provide functions such as protocol conversion and proxy registration for different types of access devices accessing the IMS network in the architecture of a fixed network access IMS. In the embodiment of the present invention, the AGCF **910** can be taken as the monitoring implementation network element. When being taken as the monitoring implementation network element, the AGCF **910** supports performing parsing processing on the received monitoring control information after information hiding, and implementing monitoring operation.

In the method provided in the embodiment of the present invention, the following transfer methods for the monitoring control information can be applied: 1) transferring by newly increasing particular SIP message in an SIP session; 2) transferring by using a particular extension head in the existing SIP message; and 3) transferring by using an extension parameter carried in the existing head in the existing SIP message.

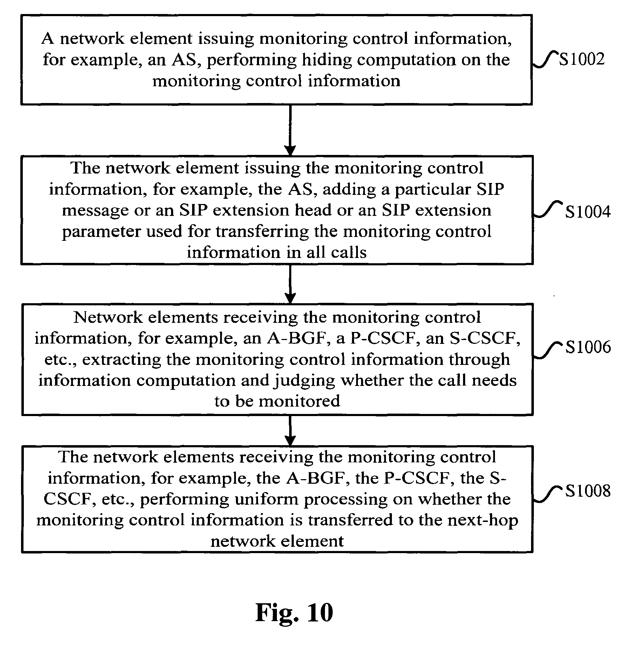

Fig. 10 is a flowchart of a method for implementing lawful monitoring according to an embodiment of the present invention. As shown in Fig. 10, the method may include the following steps (step S1002-step S1008).

Step S1002, a network element issuing monitoring control information, for example, the AS **906**, performs hiding computation on the monitoring control information, wherein the information subjected to the hiding computation indicates that the call is an "ordinary call" or a "monitored call".

Step S1004, the network element issuing the monitoring control information, for example, the AS **906**, adds a particular SIP message or an SIP extension head or an SIP extension parameter used for transferring the monitoring control information in all the calls (including the ordinary call and a monitored call).

Step S1006, network elements receiving the monitoring control information, for example, the A-BGF **908**, the P-CSCF **902**, the S-CSCF **904**, etc., extracts the monitoring control information through information computation and judges whether the call needs to be monitored, if it is the ordinary call, then monitoring processing is not performed thereon, and if it is the monitored call, then monitoring processing is performed thereon.

Step S1008, the network elements receiving the monitoring control information, for example, the A-BGF **908**, the P-CSCF **902**, the S-CSCF **904**, etc., performs uniform processing on whether the monitoring control information in all the calls is transferred to the next-hop network element, wherein the processing principles of the "ordinary call" and the "monitored call" are kept the same.

In the embodiment of the present invention, the monitoring control information can be transferred in the particular SIP message or the SIP extension head or the SIP extension parameter, algorithms of the monitoring control information hiding may be different. Different hiding algorithms, as long as they are able to ensure that information of the ordinary call and the monitored call cannot be distinguished by comparison, can be applied to the method of the embodiments of the present invention.

Through the embodiment of the present invention, the problem that the transfer of the monitoring control information of the lawful monitoring under the IMS architecture is too obvious is solved without influencing the IMS monitoring architecture, and the hidden security risk existing in the existing solution can be eliminated.

### Embodiment IV

According to an embodiment of the present invention, taking the way of newly increasing a particular SIP message in an SIP session to transfer monitoring control information for example, the method for implementing lawful monitoring provided in the embodiment of the present invention is explained.

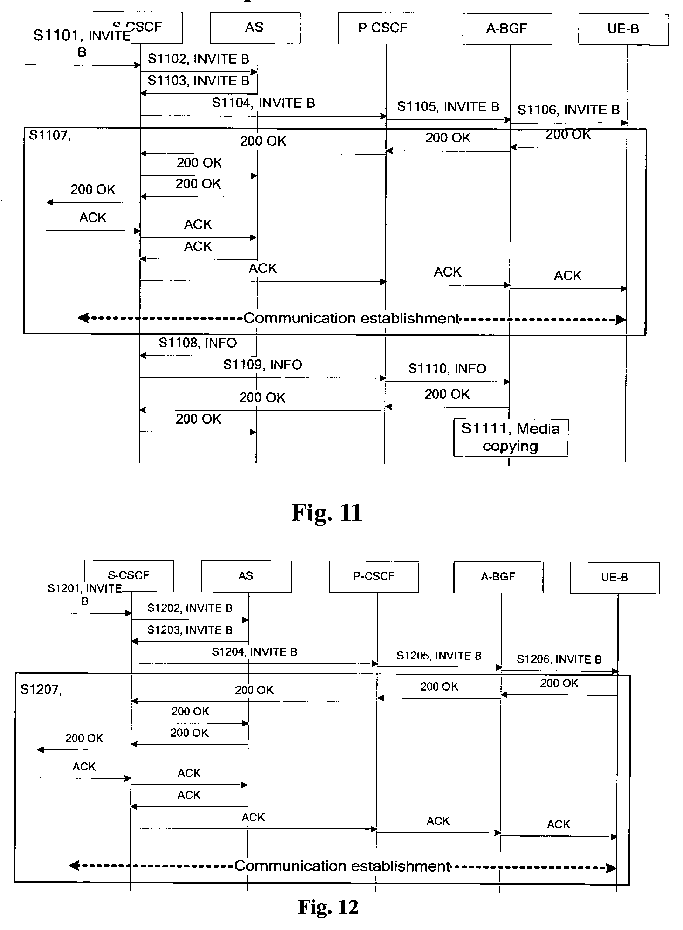

Fig. 11 and Fig. 12 are signalling flowcharts of lawful monitoring according to the relevant art. Monitoring control information (which is a media copying indication in the embodiment of the present invention) is sent to an A-BGF by an AS through an INFO request in the SIP session.

Combining with Fig. 11 below (the process of user A initiating a call is omitted in the figure), when user B is monitored and the user A calls the user B, the lawful monitoring procedure includes the following steps:
step S1101, an S-CSCF of an IMS network where the user B located receiving an SIP INVITE request;
step S1102, the S-CSCF triggering the SIP INVITE to the AS according an initial Filter Criteria (iFC) of a singing rule of the user;
step S1103, after executing a service processing logic, the AS forwarding the SIP INVITE request to the S-CSCF;
step S1104, according to information recorded when the user B registers, the S-CSCF forwarding the SIP INVITE request to the P-CSCF;
step S1105, the P-CSCF forwarding the SIP INVITE request to the A-BGF;
step S1106, the A-BGF forwarding the SIP INVITE request to the user B;
step S1107, the user B returning an SIP 200 OK response, and the response arriving at the user A through various network elements, so that a call from A to B is established;
step S1108, the AS sending an SIP INFO request in a session to the S-CSCF, wherein control information about the monitoring media copying is carried in an SIP message body, which includes a destination IP address and port information of the media copying, adding an extension head X-Indication:copy to an SIP message head and taking same as an instruction for monitoring this call;
step S1109, the S-CSCF forwarding the SIP INFO request to the P-CSCF;
step S1110, the P-CSCF forwarding the SIP INFO request to the A-BGF;
step S1111, according to the monitoring instruction X-Indication:copy, the A-BGF determining that this call needs to be monitored, acquiring the IP address and port information of the media copying from the SIP message body, and executing the monitoring media copying of this call;

Combining with Fig. 12 below (the process of user A initiating a call is omitted in the figure), when user B is not monitored and the user A calls the user B, the lawful monitoring procedure includes the following steps:
step S1201, an S-CSCF of an IMS network where the user B located receiving an SIP INVITE request;
step S1202, the S-CSCF triggering the SIP INVITE to the AS according an iFC of a singing rule of the user;
step S1203, after executing a service processing logic, the AS forwarding the SIP INVITE request to the S-CSCF;
step S1204, according to information recorded when the user B registers, the S-CSCF forwarding the SIP INVITE request to the P-CSCF;
step S1205, the P-CSCF forwarding the SIP INVITE request to the A-BGF;
step S1206, the A-BGF forwarding the SIP INVITE request to a UE-B;
step S1207, the user B returning an SIP 200 OK response, and the response arriving at the user A through various network elements, so that a call from A to B is established, and the flow ends.

It can be determined from the above-mentioned two procedures that although the above-mentioned monitoring solution can implement the requirements of the monitoring media copying, the special SIP INFO message expose the intention of monitoring, so that the special populations such as the device operation and maintenance personnel could easily find which user is monitored by contrasting different calls, thereby causing a certain hidden security risk.

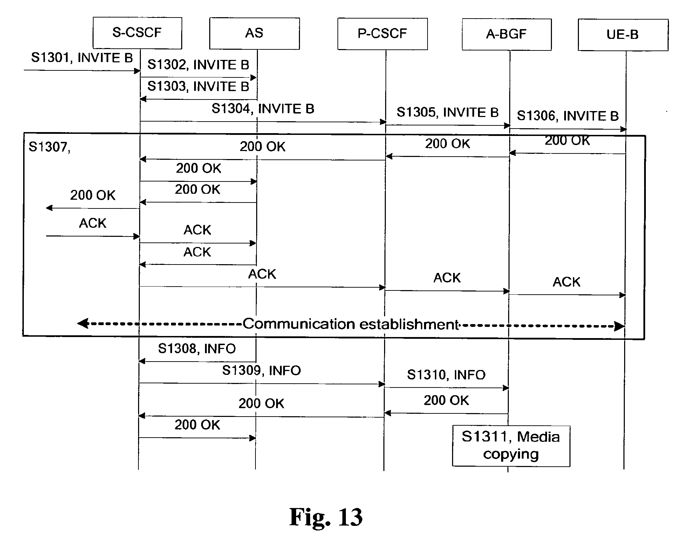

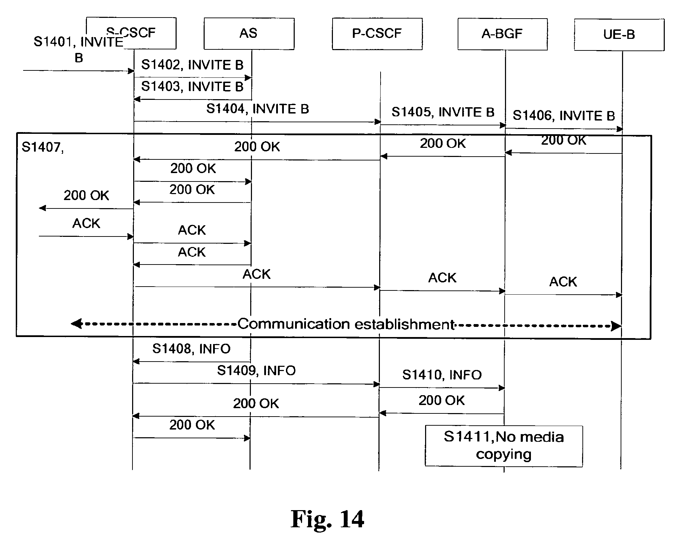

Fig. 13 and Fig. 14 are signalling flowcharts of lawful monitoring according to the embodiment of the present invention. Monitoring control information (which is a media copying indication in the embodiment of the present invention) is sent to an A-BGF by an AS through an INFO request in the SIP session.

Combining with Fig. 13 (the process of user A initiating a call is omitted in the figure), when user B is monitored and the user A calls the user B, the lawful monitoring procedure includes the following steps:
step S1301, an S-CSCF of an IMS network where the user B located receiving an SIP INVITE request;
step S1302, the S-CSCF triggering the SIP INVITE to the AS according an iFC of a singing rule of the user;
step S1303, after executing a service processing logic, the AS forwarding the SIP INVITE request to the S-CSCF;
step S1304, according to information recorded when the user B registers, the S-CSCF forwarding the SIP INVITE request to the P-CSCF;
step S 1305, the P-CSCF forwarding the SIP INVITE request to the A-BGF; step S1306, the A-BGF forwarding the SIP INVITE request to the user B;
step S1307, the user B returning an SIP 200 OK response, and the response arriving at the user A through various network elements, so that a call from A to B is established;
step S1308, the AS sending the SIP INFO request in the session to the S-CSCF, wherein control information of the monitoring media copying is carried in an SIP message body, which includes the destination IP address and port information of the media copying. A character string composed of 16 letters is used at an SIP extension head X-Indication, and the monitoring instruction is placed therein. For example, "a port in the SIP message body" modulo 16 may get a value in the range of 0-15, which then serves as a position for depositing the monitoring instruction, a letter B is used as an instruction that an ordinary call is not monitored, and other 15 letters may be random letter combination of {0-9}, {a-z} and {A-Z};
step S1309, the S-CSCF forwarding the SIP INFO request to the P-CSCF;
step S1310, the P-CSCF forwarding the SIP INFO request to the A-BGF;
step S1311, according to the extension head X-Indication, the A-BGF reading port information form the SIP message body, executing the same computation as the AS to judge that this call needs to be monitored, and executing the monitoring media copying of this call;

Combining with Fig. 14 (the process of user A initiating a call is omitted in the figure), when user B is not monitored and the user A calls the user B, the lawful monitoring procedure includes the following steps:
step S1401, an S-CSCF of an IMS network where the user B located receiving an SIP INVITE request;
step S1402, the S-CSCF triggering the SIP INVITE to the AS according an iFC of a singing rule of the user;
step S1403, after executing a service processing logic, the AS forwarding the SIP INVITE request to the S-CSCF;
step S1404, according to information recorded when the user B registers, the S-CSCF forwarding the SIP INVITE request to the P-CSCF;
step S1405, the P-CSCF forwarding the SIP INVITE request to the A-BGF;
step S1406, the A-BGF forwarding the SIP INVITE request to the user B;
step S1407, the user B returning an SIP 200 OK response, and the response arriving at the user A through various network elements, so that a call from A to B is established;
step S1408, the AS sending the SIP INFO request in the session to the S-CSCF, wherein control information of the monitoring media copying is carried in an SIP message body, which includes the destination IP address and port information of the media copying. A character string composed of 16 letters is used at an SIP extension head X-Indication, and the monitoring instruction is placed therein. For example, "a port in the SIP message body" modulo 16 may get a value in the range of 0-15, which then serves as a position for depositing the monitoring instruction, a letter B is used as an instruction that an ordinary call is not monitored, and other 15 letters may be random letter combination of {0-9}, {a-z} and {A-Z};
step S1409, the S-CSCF forwarding the SIP INFO request to the P-CSCF;
step S1410, the P-CSCF forwarding the SIP INFO request to the A-BGF;
step S1411, according to the extension head X-Indication, the A-BGF reading port information form the SIP message body, executing the same computation as the AS to judge that this call does not need to be monitored, and do not executing a monitoring media copying operation.

It can be determined from the above-mentioned two procedures that in the case where the user B is monitored or is not monitored, the SIP message flow and the SIP parameters stay the same, and the monitoring instruction performs information hiding through a certain computation; in the case that the computational rule is not known, the special populations such as the device operation and maintenance personnel could not learn whether the user is monitored, thereby the hidden security risk existing in the original solution is eliminated.

### Embodiment V

According to an embodiment of the present invention, taking the way of establishing an SIP message used in a session to transfer monitoring control information during an SIP session establishment process for example, the method for implementing lawful monitoring provided in the embodiment of the present invention is explained.

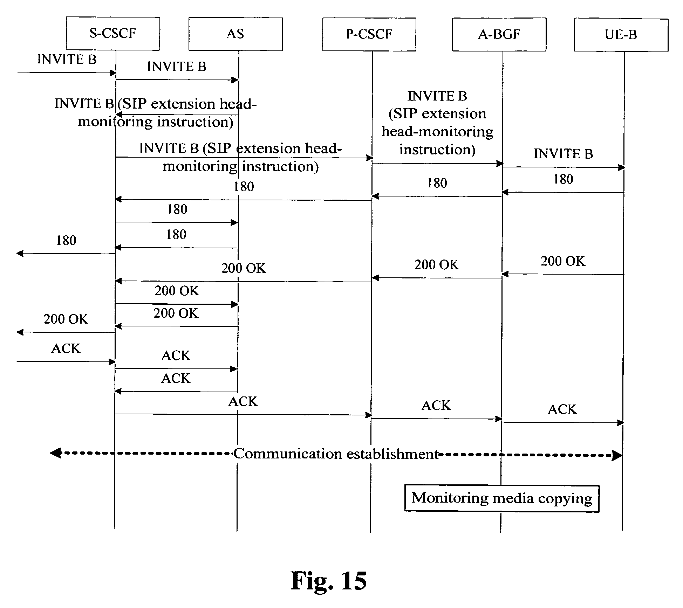

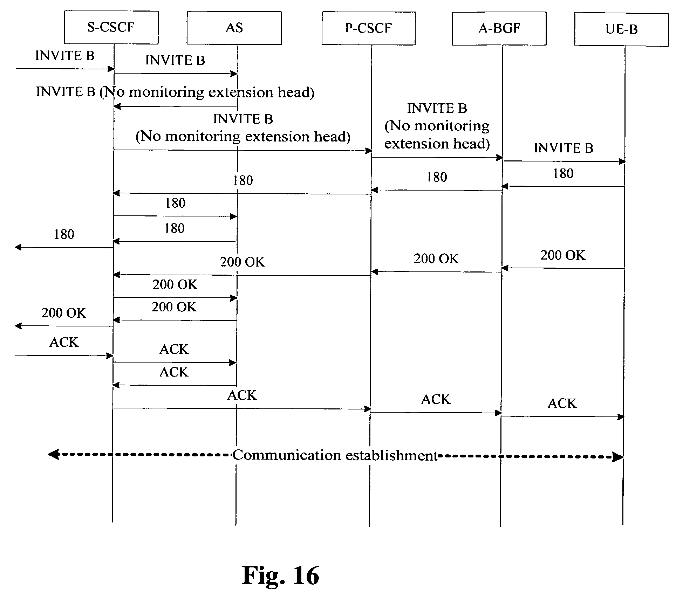

In the relevant art, as shown in Fig. 15, when user A or B is monitored, during the communication between the user A and the user B, the monitoring instruction information is carried in an extension head (for example, the extension head of INVITE B) of the SIP message. When the user A and the user B do not need to be monitored, as shown in Fig. 16, the monitoring instruction information is not carried in the above-mentioned message.

In the embodiment of the present invention, information transferred through an extension header field of an SIP protocol is used to contain interception related information, for example, whether the monitored party is a calling party or a called party, a target address of media copying, etc. The extension header field of the SIP protocol carries the monitoring instruction information, which instructs the monitoring enforcement network element whether to monitor the communication. The extension header field of the SIP protocol can either be carried in a returned response message (for example, 180/183/200 OK, etc., in the described embodiment, the message is the first response message, but the embodiment of the present invention is not limited to the first one) to AS/S-CSCF/P-CSCF/A-BGF of B, or be forward carried in a request message (for example, INVITE/PRACK/ACK, etc., in the described embodiment, the message is the first request message, but the embodiment of the present invention is not limited to the first request message) to the AS/S-CSCF/P-CSCF/A-BGF of B.

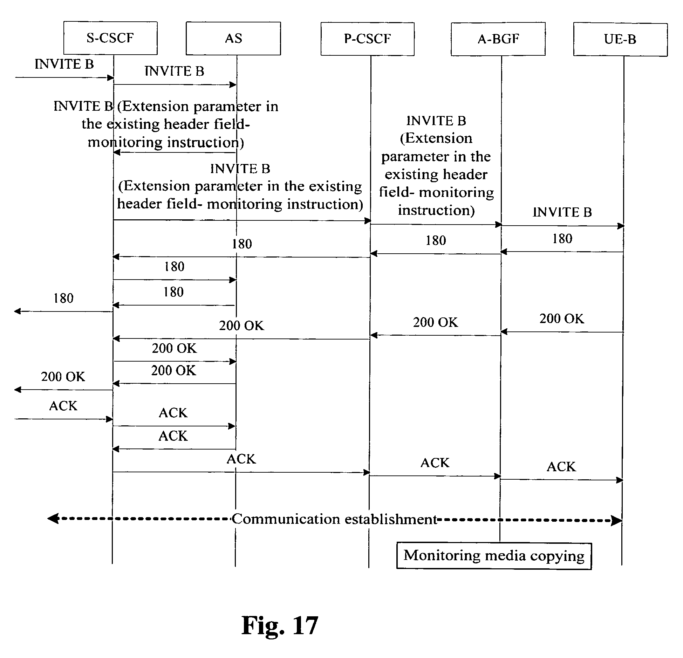

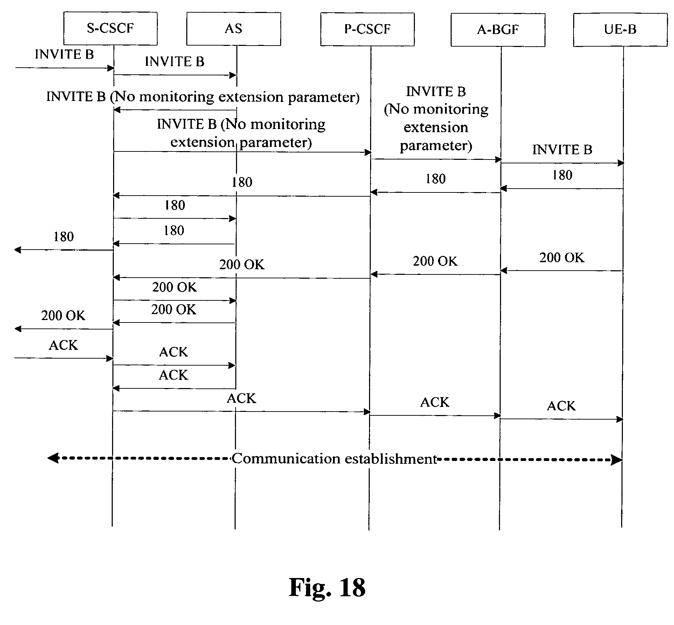

In addition, in the relevant art, as shown in Fig. 17, when user A or B is monitored, during the communication between the user A and the user B, extension parameters in the existing header field of the SIP message carries the monitoring instruction information; and when the user A and the user B do not need to be monitored, as shown in Fig. 18, the monitoring instruction information is not carried in the above-mentioned message.

In the embodiment of the present invention, information transferred through the extension parameters in the existing header field of the SIP protocol can also be used to contain interception related information, for example, whether the monitored party is a calling party or a called party, a target address of media copying, etc. The extension parameters in the existing header field of the SIP protocol carries the monitoring instruction information, which instructs the monitoring enforcement network element whether to monitor the communication. The above-mentioned extension parameters can either be carried in a returned response message (for example, 180/183/200 OK, etc., in the described embodiment, the message is the first response message, but the embodiment of the present invention is not limited to the first one) to AS/S-CSCF/P-CSCF/A-BGF of B, or be forward carried in a request message (for example, INVITE/PRACK/ACK, etc., in the described embodiment, the message is the first request message, but the embodiment of the present invention is not limited to the first request message) to the AS/S-CSCF/P-CSCF/A-BGF of B.

It can be seen from the embodiment of the present invention that in the embodiment of the present invention, no matter the monitoring is required or not, the monitoring instruction information is carried in the extension parameters of both the extension header field of the SIP protocol or the existing header field of the SIP message, so that the particular personnel cannot determine whether the communication is monitored by contrasting whether the monitoring instruction information is carried in the message, thereby increasing the security. As to the hiding precaution for the monitoring instruction information, the same method as the above-mentioned embodiment of the present invention can be used, and the details are not described herein again.

It can be seen from the above-mentioned description that the present invention implements the following technical effects: after it is determined that the currently sent message is a message used for instructing the monitoring enforcement network element whether to monitor the current communication, the monitoring instruction information used for instructing the monitoring enforcement network element whether to monitor the current communication is carried in the above-mentioned message. In this way, no matter the monitoring is required or not, the message used for instructing the monitoring enforcement network element whether to monitor the current communication contains the monitoring instruction information, so that a difference between monitored communication and unmonitored communication can not be identified, a hidden security risk in existing monitoring is eliminated, and a communication monitoring function can be better implemented. The monitoring enforcement network element receives the message carrying the monitoring instruction information used for instructing the monitoring enforcement network element whether to monitor the current communication and judges whether the monitoring instruction information instructs to monitor the current communication, if yes, then the monitoring enforcement network element monitors the communication, and the communication monitoring with high security is implemented.

Obviously, those skilled in the art should know that each of the above-mentioned components or steps of the present invention can be implemented by universal computing devices; the components or steps can be focused on a single computing device, or distributed on the network formed by a plurality of computing devices; optionally, they can be implemented by the program codes which can be executed by the computing devices; thereby, the components or steps can be stored in a memory device and executed by the computing devices; and under some circumstances, the shown or described steps can be executed in different orders, or can be independently manufactured as each integrated circuit component, or a plurality of components or steps thereof can be manufactured to be single integrated circuit component, thus to be implemented. In this way, the present invention is not restricted to any particular hardware and software combination.

The descriptions above are only the preferable embodiment of the present invention, which are not used to restrict the present invention, for a person skilled in the art, the present invention may have various changes and variations. Any amendments, equivalent substitutions, improvements, etc. within the spirit and principle of the present invention are all included in the scope of the protection as defined in the appended claims of the present invention.

## Claims

1. A method for instructing communication monitoring in an IMS system, **characterized by** comprising:
determining by a determination component that a currently sent message is a message used for instructing a monitoring enforcement network element whether to monitor a current communication (S202);
and sending by a sending component the message carrying monitoring instruction information to the monitoring enforcement network element, wherein the monitoring instruction information is used for instructing the monitoring enforcement network element whether to monitor the current communication (S204).

2. The method according to claim 1, **characterized in that** before sending the message carrying the monitoring instruction information to the monitoring enforcement network element (S204), the method further comprises: encrypting the monitoring instruction information; preferably, encrypting the monitoring instruction information comprises: hiding the monitoring instruction information in a sequence representing the monitoring instruction information.

3. The method according to claim 2, **characterized in that** hiding the monitoring instruction information in the sequence representing the monitoring instruction information comprises:
randomly determining a position of the monitoring instruction information in the sequence representing the monitoring instruction information;
and carrying the monitoring instruction information in the determined position.

4. The method according to claim 3, **characterized in that** after carrying the monitoring instruction information in the determined position, the method further comprises:
carrying random characters in other positions of the sequence representing the monitoring instruction information.

5. The method according to claim 4, **characterized in that**
the message further carries monitoring control information, wherein the monitoring control information comprises: a destination IP address of monitoring media copying and a port number of the monitoring media copying;
and randomly determining the position of the monitoring instruction information in the sequence representing the monitoring instruction information comprises: determining the position of the monitoring instruction information in the sequence representing the monitoring instruction information according to the port number.

6. The method according to any one of claims 1 to 5, **characterized in that** determining that the currently sent message is a message used for instructing the monitoring enforcement network element whether to monitor the current communication (S202) comprises:
judging whether the currently sent message is pre-defined one or more messages used for instructing the monitoring enforcement network element whether to monitor the current communication, if yes, then determining that the currently sent message is a message used for instructing the monitoring enforcement network element whether to monitor the current communication; or
judging whether the currently sent message is a message used for transferring monitoring control information and required to be sent in all communications, if yes, then determining that the currently sent message is a message used for instructing the monitoring enforcement network element whether to monitor the current communication.

7. A method for implementing communication monitoring in an IMS system, **characterized by** comprising:
a monitoring enforcement network element receiving a message carrying monitoring instruction information, wherein the monitoring instruction information is used for instructing the monitoring enforcement network element whether to monitor current communication (S602);
the monitoring enforcement network element judging whether the monitoring instruction information instructs to monitor the current communication (S604);
and if yes, the monitoring enforcement network element monitoring the current communication (S606).

8. The method according to claim 7, **characterized in that** before the monitoring enforcement network element judging whether the monitoring instruction information instructs to monitor the current communication (S604), the method further comprises:
the monitoring enforcement network element decrypting the received message carrying the monitoring instruction information to obtain the monitoring instruction information;
preferably, the monitoring enforcement network element decrypting the received message carrying the monitoring instruction information to obtain the monitoring instruction information comprises:
the monitoring enforcement network element determining a position of the monitoring instruction information in a sequence representing the monitoring instruction information to obtain the monitoring instruction information from the determined position.

9. The method according to claim 8, **characterized in that**
the message further carries monitoring control information, wherein the monitoring control information comprises: a destination IP address of monitoring media copying and a port number of the monitoring media copying;
and the monitoring enforcement network element determining the position of the monitoring instruction information in the sequence representing the monitoring instruction information to obtain the monitoring instruction information from the determined position comprises: the monitoring enforcement network element determining the position of the monitoring instruction information in the sequence representing the monitoring instruction information according to the port number to obtain the monitoring instruction information from the determined position.

10. A device for instructing communication monitoring in an IMS system, **characterized by** comprising:
a determination component (10), which is configured to determine that a currently sent message is a message used for instructing a monitoring enforcement network element whether to monitor a current communication;
and a sending component (20), which is configured to send the message carrying monitoring instruction information to the monitoring enforcement network element, wherein the monitoring instruction information is used for instructing the monitoring enforcement network element whether to monitor the current communication.

11. The device according to claim 10, **characterized by** further comprising:
an encryption component (30), which is configured to encrypt the monitoring instruction information before the sending component sends the message carrying the monitoring instruction information to the monitoring enforcement network element;
preferably, the encryption component encrypts the monitoring instruction information according to the following method: hiding the monitoring instruction information in a sequence representing the monitoring instruction information.

12. The device according to claim 11, **characterized in that** the encryption component comprises:
a determination unit, which is configured to randomly determine a position of the monitoring instruction information in the sequence representing the monitoring instruction information;
and a carrying unit, which is configured to carry the monitoring instruction information in the determined position.

13. The device according to any one of claims 10 to 12, **characterized in that** the determination component comprises:
a first determination unit (102), which is configured to judge whether the currently sent message is pre-defined one or more messages used for instructing the monitoring enforcement network element whether to monitor the current communication, if yes, then determine that the currently sent message is a message used for instructing the monitoring enforcement network element whether to monitor the current communication;
and a second determination unit (104), which is configured to judge whether the currently sent message is a message used for transferring monitoring control information and required to be sent in all communications, if yes, then determine that the currently sent message is a message used for instructing the monitoring enforcement network element whether to monitor the current communication.

14. A device for implementing communication monitoring in an IMS system, **characterized by** comprising:
a reception component (40), which is configured to receive a message carrying monitoring instruction information, wherein the monitoring instruction information is used for instructing a monitoring enforcement network element whether to monitor a current communication;
a judgement component (50), which is configured to judge whether the monitoring instruction information instructs to monitor the current communication;
and a monitoring component (60), which is configured to monitor the current communication when a judgement result of the judgement component is yes.

15. The device according to claim 14, **characterized in that** the device further comprises:
a decryption component (70), which is configured to decrypt the message which carries the monitoring instruction information and is received by the reception component to obtain the monitoring instruction information.

## Patentansprüche

1. Verfahren zur Anweisung der Kommunikationsüberwachung in einem IMS-System, **dadurch gekennzeichnet, dass** es Folgendes umfasst:
Bestimmen durch eine Bestimmungskomponente, dass eine gegenwärtig gesendete Nachricht eine Nachricht ist, die verwendet wird, um ein Überwachungsdurchsetzungs-Netzwerkelement anzuweisen, ob eine gegenwärtige Kommunikation (S202) überwacht werden soll;
und Senden durch eine Sendekomponente der Nachricht, die die Überwachungsanweisungsinformation trägt, an das Überwachungdurchsetzungs-Netzwerkelement, wobei die Überwachungsanweisungsinformation verwendet wird, um das Überwachungsdurchsetzungs-Netzwerkelement anzuweisen, ob die gegenwärtige Kommunikation (S204) überwacht werden soll.

2. Verfahren nach Anspruch 1, **dadurch gekennzeichnet, dass** vor dem Senden der Nachricht, die die Überwachungsanweisungsinformation trägt, an das Überwachungdurchsetzungs-Netzwerkelement (S204), das Verfahren weiter Folgendes umfasst: Verschlüsseln der Überwachungsanweisungsinformation; vorzugsweise umfasst das Verschlüsseln der Überwachungsanweisungsinformation Folgendes: Verbergen der Überwachungsanweisungsinformation in einer Sequenz, die die Überwachungsanweisungsinformation darstellt.

3. Verfahren nach Anspruch 2, **dadurch gekennzeichnet, dass** das Verbergen der Überwachungsanweisungsinformation in einer Sequenz, die die Überwachungsanweisungsinformation darstellt, Folgendes umfasst:
zufälliges Bestimmen einer Position der Überwachungsanweisungsinformation in der Sequenz, die die Überwachungsanweisungsinformation darstellt;
und Tragen der Überwachungsanweisungsinformation in die bestimmte Position.

4. Verfahren nach Anspruch 3, **dadurch gekennzeichnet, dass** nach dem Tragen der Überwachungsanweisungsinformation in die bestimmte Position das Verfahren weiter Folgendes umfasst:
Tragen von zufälligen Zeichen in anderen Positionen der Sequenz, die die Überwachungsanweisungsinformation darstellt.

5. Verfahren nach Anspruch 4, **dadurch gekennzeichnet, dass**
die Nachricht weiter Überwachungssteuerinformation trägt, wobei die Überwachungssteuerinformation Folgendes umfasst: eine Ziel-IP-Adresse der Überwachung des Medienkopierens und eine Portnummer der Überwachung des Medienkopierens;
und das zufällige Bestimmen der Position der Überwachungsanweisungsinformation in der Sequenz, die die Überwachungsanweisungsinformation darstellt, Folgendes umfasst: Bestimmen der Position der Überwachungsanweisungsinformation in der Sequenz, die die Überwachungsanweisungsinformation darstellt, gemäß der Portnummer.

6. Verfahren nach einem der Ansprüche 1 bis 5, **dadurch gekennzeichnet, dass** das Bestimmen, dass die gegenwärtig gesendete Nachricht eine Nachricht ist, die verwendet wird, um das Überwachungsdurchsetzungs-Netzwerkelement anzuweisen, ob die gegenwärtige Kommunikation (S202) überwacht werden soll, Folgendes umfasst:
Beurteilen, ob die gegenwärtig gesendete Nachricht vordefiniert eine oder mehrere Nachrichten ist, die verwendet werden, um das Überwachungsdurchsetzungs-Netzwerkelement anzuweisen, ob die gegenwärtige Kommunikation überwacht werden soll, falls ja Bestimmen, dass die gegenwärtig gesendete Nachricht eine Nachricht ist, die verwendet wird, um das Überwachungsdurchsetzungs-Netzwerkelement anzuweisen, ob die gegenwärtige Kommunikation überwacht werden soll; oder
Beurteilen, ob die gegenwärtig gesendete Nachricht eine Nachricht ist, die verwendet wird, um Überwachungssteuerinformation zu übertragen und an alle Kommunikationen gesendet werden muss, falls ja Bestimmen, dass die gegenwärtig gesendete Nachricht eine Nachricht ist, die verwendet wird, um das Überwachungsdurchsetzungs-Netzwerkelement anzuweisen, ob die gegenwärtige Kommunikation überwacht werden soll.

7. Verfahren zur Implementierung einer Kommunikationsüberwachung in einem IMS-System, **dadurch gekennzeichnet, dass** es Folgendes umfasst:
ein Überwachungsdurchsetzungs-Netzwerkelement, das eine Nachricht empfängt, die Überwachungsanweisungsinformation trägt, wobei die Überwachungsanweisungsinformation verwendet wird, um das Überwachungsdurchsetzungs-Netzwerkelement anzuweisen, ob eine gegenwärtige Kommunikation (S602) überwacht werden soll;
Beurteilen durch das Überwachungsdurchsetzungs-Netzwerkelement, ob die Überwachungsanweisungsinformation anweist, die gegenwärtige Kommunikation (S604) zu überwachen,
und falls ja, Überwachen der gegenwärtigen Kommunikation (606) durch das Überwachungsdurchsetzungs-Netzwerkelement.

8. Verfahren nach Anspruch 7, **dadurch gekennzeichnet, dass** vor dem Beurteilen durch das Überwachungsdurchsetzungs-Netzwerkelement, ob die Überwachungsanweisungsinformation anweist, die gegenwärtige Kommunikation (S604) zu überwachen, das Verfahren weiter Folgendes umfasst:
Entschlüsseln durch das Überwachungsdurchsetzungs-Netzwerkelement der empfangenen Nachricht, die die Überwachungsanweisungsinformation trägt, um die Überwachungsanweisungsinformation zu erhalten;
vorzugsweise umfasst das Entschlüsseln durch das Überwachungsdurchsetzungs-Netzwerkelement der empfangenen Nachricht, die die Überwachungsanweisungsinformation trägt, um die Überwachungsanweisungsinformation zu erhalten, Folgendes:
Bestimmen durch das Überwachungsdurchsetzungs-Netzwerkelement einer Position der Überwachungsanweisungsinformation in einer Sequenz, die die Überwachungsanweisungsinformation darstellt, um die Überwachungsanweisungsinformation aus der bestimmten Position zu erhalten.

9. Verfahren nach Anspruch 8, **dadurch gekennzeichnet, dass**
die Nachricht weiter Überwachungssteuerinformation trägt, wobei die Überwachungssteuerinformation Folgendes umfasst: eine Ziel-IP-Adresse der Überwachung des Medienkopierens und eine Portnummer der Überwachung des Medienkopierens;
und das Bestimmen durch das Überwachungsdurchsetzungs-Netzwerkelement der Position der Überwachungsanweisungsinformation in der Sequenz, die die Überwachungsanweisungsinformation darstellt, um die Überwachungsanweisungsinformation aus der bestimmten Position zu erhalten, Folgendes umfasst:
Bestimmen durch das Überwachungsdurchsetzungs-Netzwerkelement der Position der Überwachungsanweisungsinformation in der Sequenz, die die Überwachungsanweisungsinformation darstellt, gemäß der Portnummer, um die Überwachungsanweisungsinformation aus der bestimmten Position zu erhalten.

10. Vorrichtung zur Anweisung der Kommunikationsüberwachung in einem IMS-System, **dadurch gekennzeichnet, dass** es Folgendes umfasst:
eine Bestimmungskomponente (10), die konfiguriert ist, um zu bestimmen, dass eine gegenwärtig gesendete Nachricht eine Nachricht ist, die verwendet wird, um ein Überwachungsdurchsetzungs-Netzwerkelement anzuweisen, ob eine gegenwärtige Kommunikation überwacht werden soll;
und eine Sendekomponente (20), die konfiguriert ist, um die Nachricht, die die Überwachungsanweisungsinformation trägt, an das Überwachungdurchsetzungs-Netzwerkelement zu senden, wobei die Überwachungsanweisungsinformation verwendet wird, um das Überwachungsdurchsetzungs-Netzwerkelement anzuweisen, ob die gegenwärtige Kommunikation überwacht werden soll.

11. Vorrichtung nach Anspruch 10, **dadurch gekennzeichnet, dass** es weiter Folgendes umfasst:
eine Verschlüsselungskomponente (30), die konfiguriert ist, um die Überwachungsanweisungsinformation zu verschlüsseln, vor die Senderkomponente die Nachricht, die die Überwachungsanweisungsinformation trägt, an das Überwachungdurchsetzungs-Netzwerkelement sendet;
vorzugsweise verschlüsselt die Verschlüsselungskomponente die Überwachungsanweisungsinformation gemäß dem Folgenden Verfahren: Verbergen der Überwachungsanweisungsinformation in einer Sequenz, die die Überwachungsanweisungsinformation darstellt.

12. Verfahren nach Anspruch 11, **dadurch gekennzeichnet, dass** die Verschlüsselungskomponente Folgendes umfasst:
eine Bestimmungseinheit, die konfiguriert ist, und eine Position der Überwachungsanweisungsinformation in der Sequenz, die die Überwachungsanweisungsinformation darstellt, zufällig zu bestimmen;
und eine Trageeinheit, die konfiguriert ist, um die Überwachungsanweisungsinformation in der bestimmten Position zu tragen.

13. Verfahren nach einem der Ansprüche 10 bis 12, **dadurch gekennzeichnet, dass** die Bestimmungskomponente Folgendes umfasst:
eine erste Bestimmungseinheit (102), die konfiguriert ist, um zu beurteilen, ob die gegenwärtig gesendete Nachricht vordefiniert eine oder mehrere Nachrichten ist, die verwendet werden, um das Überwachungsdurchsetzungs-Netzwerkelement anzuweisen, ob die gegenwärtige Kommunikation überwacht werden soll, falls ja Bestimmen, dass die gegenwärtig gesendete Nachricht eine Nachricht ist, die verwendet wird, um das Überwachungsdurchsetzungs-Netzwerkelement anzuweisen, ob die gegenwärtige Kommunikation überwacht werden soll;
und eine zweite Bestimmungseinheit (104), die konfiguriert ist, um zu beurteilen, ob die gegenwärtig gesendete Nachricht eine Nachricht ist, die verwendet wird, um Überwachungssteuerinformation zu übertragen und an alle Kommunikationen gesendet werden muss, falls ja Bestimmen, dass die gegenwärtig gesendete Nachricht eine Nachricht ist, die verwendet wird, um das Überwachungsdurchsetzungs-Netzwerkelement anzuweisen, ob die gegenwärtige Kommunikation überwacht werden soll.

14. Vorrichtung zur Implementierung einer Kommunikationsüberwachung in einem IMS-System, **dadurch gekennzeichnet, dass** es Folgendes umfasst:
eine Empfangskomponente (40), die konfiguriert ist, um eine Nachricht zu empfangen, die Überwachungsanweisungsinformation trägt, wobei die Überwachungsanweisungsinformation verwendet wird, um ein Überwachungsdurchsetzungs-Netzwerkelement anzuweisen, ob eine gegenwärtige Kommunikation überwacht werden soll;
eine Beurteilungskomponente (50), die konfiguriert ist, um zu beurteilen, ob die Überwachungsanweisungsinformation anweist, die gegenwärtige Kommunikation zu überwachen;
und eine Überwachungskomponente (60), die konfiguriert ist, um die gegenwärtige Kommunikation zu überwachen, wenn ein Beurteilungsergebnis der Beurteilungskomponente ja ist.

15. Verfahren nach Anspruch 14, **dadurch gekennzeichnet, dass** das Verfahren weiter Folgendes umfasst:
eine Entschlüsselungskomponente (70), die konfiguriert ist, um die Nachricht zu entschlüsseln, die die Überwachungsanweisungsinformation trägt, und durch die Empfangskomponente empfangen wird, um die Überwachungsanweisungsinformation zu erhalten.

## Revendications

1. Procédé pour ordonner la surveillance d'une communication dans un système IMS, **caractérisé en ce qu'**il comprend :
la détermination par un composant de détermination du fait qu'un message actuellement transmis est un message utilisé pour donner instruction à un élément de réseau d'exécution de surveillance sur le fait de surveiller une communication actuelle (S202) ;
et l'envoi par un composant d'envoi du message comprenant des informations d'instruction de surveillance à l'élément de réseau d'exécution de surveillance, dans lequel les informations d'instruction de surveillance sont utilisées pour donner instruction à l'élément de réseau d'exécution de surveillance sur le fait de surveiller la communication actuelle (S204).

2. Procédé selon la revendication 1, **caractérisé en ce que**, avant l'envoi du message comprenant des informations d'instruction de surveillance à l'élément de réseau d'exécution de surveillance (S204), le procédé comprend en outre : le chiffrement des informations d'instruction de surveillance ; de préférence, le chiffrement des informations d'instruction de surveillance comprend : le masquage des informations d'instruction de surveillance dans une séquence représentant les informations d'instruction de surveillance.

3. Procédé selon la revendication 2, **caractérisé en ce que** le masquage des informations d'instruction de surveillance dans la séquence représentant les informations d'instruction de surveillance comprend :
la détermination aléatoire d'une position des informations d'instruction de surveillance dans la séquence représentant les informations d'instruction de surveillance ;
et le transport des informations d'instruction de surveillance dans la position déterminée.

4. Procédé selon la revendication 3, **caractérisé en ce que**, après le transport des informations d'instruction de surveillance dans la position déterminée, le procédé comprend en outre :
le transport de caractères aléatoire dans d'autres positions de la séquence représentant les informations d'instruction de surveillance.

5. Procédé selon la revendication 4, **caractérisé en ce que**
le message comprend en outre des informations de commande de surveillance, dans lequel les informations de commande de surveillance comprennent : une adresse IP de destination de copie de supports de surveillance et un numéro de port de la copie de support de surveillance ;
et la détermination aléatoire de la position des informations de commande de surveillance dans la séquence représentant les informations d'instruction de surveillance comprend : la détermination de la position des informations de commande de surveillance dans la séquence représentant les informations d'instruction de surveillance en fonction du numéro de port.

6. Procédé selon l'une quelconque des revendications 1 à 5, **caractérisé en ce que** la détermination du fait que le message actuellement transmis est un message utilisé pour donner instruction à l'élément de réseau d'exécution de surveillance sur le fait de surveiller la communication actuelle (S202) comprend :
le jugement du fait que le message actuellement transmis est un ou plusieurs messages prédéfinis utilisés pour donner instruction à l'élément de réseau d'exécution de surveillance sur le fait de surveiller la communication actuelle, dans l'affirmative, alors la détermination du fait que le message actuellement transmis est un message utilisé pour donner instruction à l'élément de réseau d'exécution de surveillance sur le fait de surveiller la communication actuelle ; ou
le jugement du fait que le message actuellement transmis est un message utilisé pour transférer des informations de commande de surveillance et devant être envoyé dans toutes les communications, dans l'affirmative, alors la détermination du fait que le message actuellement transmis est un message utilisé pour donner instruction à l'élément de réseau d'exécution de surveillance sur le fait de surveiller la communication actuelle.

7. Procédé pour mettre en oeuvre la surveillance d'une communication dans un système IMS, **caractérisé en ce qu'**il comprend :
la réception par un élément de réseau d'exécution de surveillance d'un message comprenant des informations d'instruction de surveillance, dans lequel les informations d'instruction de surveillance sont utilisées pour donner instruction à l'élément de réseau d'exécution de surveillance sur le fait de surveiller la communication actuelle (S602) ;
le jugement par l'élément de réseau d'exécution de surveillance du fait que les informations d'instruction de surveillance donnent instruction de surveiller la communication actuelle (S604) ;
et, dans l'affirmative, la surveillance par l'élément de réseau d'exécution de surveillance de la communication actuelle (S606).

8. Procédé selon la revendication 7, **caractérisé en ce que**, avant le jugement par l'élément de réseau d'exécution de surveillance du fait que les informations d'instruction de surveillance donnent instruction de surveiller la communication actuelle (S604), le procédé comprend en outre :
le déchiffrement par l'élément de réseau d'exécution de surveillance du message reçu comprenant les informations d'instruction de surveillance pour obtenir les informations d'instruction de surveillance ;
de préférence, le déchiffrement par l'élément de réseau d'exécution de surveillance du message reçu comprenant les informations d'instruction de surveillance pour obtenir les informations d'instruction de surveillance comprend :
la détermination par l'élément de réseau d'exécution de surveillance d'une position des informations d'instruction de surveillance dans une séquence représentant les informations d'instruction de surveillance pour obtenir les informations d'instruction de surveillance à partir de la position déterminée.

9. Procédé selon la revendication 8, **caractérisé en ce que**
le message comprend en outre des informations de commande de surveillance, dans lequel les informations de commande de surveillance comprennent : une adresse IP de destination de copie de supports de surveillance et un numéro de port de la copie de support de surveillance ;
et la détermination par l'élément de réseau d'exécution de surveillance de la position des informations de commande de surveillance dans la séquence représentant les informations d'instruction de surveillance pour obtenir les informations d'instruction de surveillance à partir de la position déterminée comprend : la détermination par l'élément de réseau d'exécution de surveillance de la position des informations de commande de surveillance dans la séquence représentant les informations d'instruction de surveillance en fonction du numéro de port pour obtenir les informations d'instruction de surveillance à partir de la position déterminée.

10. Dispositif pour ordonner la surveillance d'une communication dans un système IMS, **caractérisé en ce qu'**il comprend :
un composant de détermination (10), qui est configuré pour déterminer le fait qu'un message actuellement transmis est un message utilisé pour donner instruction à un élément de réseau d'exécution de surveillance sur le fait de surveiller une communication actuelle ;
et un composant d'envoi (20), qui est configuré pour envoyer le message comprenant des informations d'instruction de surveillance à l'élément de réseau d'exécution de surveillance, dans lequel les informations d'instruction de surveillance sont utilisées pour donner instruction à l'élément de réseau d'exécution de surveillance sur le fait de surveiller la communication actuelle.

11. Dispositif selon la revendication 10, **caractérisé en ce qu'**il comprend en outre :
un composant de chiffrement (30), qui est configuré pour chiffrer les informations d'instruction de surveillance avant que le composant d'envoi envoie le message comprenant des informations d'instruction de surveillance à l'élément de réseau d'exécution de surveillance ;
de préférence, le composant de chiffrement chiffre les informations d'instruction de surveillance selon le procédé suivant : le masquage des informations d'instruction de surveillance dans une séquence représentant les informations d'instruction de surveillance.

12. Dispositif selon la revendication 11, **caractérisé en ce que** le composant de chiffrement comprend :
une unité de détermination, qui est configurée pour déterminer aléatoirement une position des informations d'instruction de surveillance dans la séquence représentant les informations d'instruction de surveillance ;
et une unité de transport, qui est configurée pour transporter les informations d'instruction de surveillance dans la position déterminée.

13. Dispositif selon l'une quelconque des revendications 10 à 12, **caractérisé en ce que** le composant de détermination comprend :
une première unité de détermination (102), qui est configurée pour juger le fait que le message actuellement transmis est un ou plusieurs messages prédéfinis utilisés pour donner instruction à l'élément de réseau d'exécution de surveillance sur le fait de surveiller la communication actuelle, dans l'affirmative, déterminer alors le fait que le message actuellement transmis est un message utilisé pour donner instruction à l'élément de réseau d'exécution de surveillance sur le fait de surveiller la communication actuelle ;
et une deuxième unité de détermination (104), qui est configurée pour juger le fait que le message actuellement transmis est un message utilisé pour transférer des informations de commande de surveillance et devant être envoyé dans toutes les communications, dans l'affirmative, déterminer alors le fait que le message actuellement transmis est un message utilisé pour donner instruction à l'élément de réseau d'exécution de surveillance sur le fait de surveiller la communication actuelle.

14. Dispositif pour mettre en oeuvre la surveillance d'une communication dans un système IMS, **caractérisé en ce qu'**il comprend :
un composant de réception (40), qui est configuré pour recevoir un message comprenant des informations d'instruction de surveillance, dans lequel les informations d'instruction de surveillance sont utilisées pour donner instruction à un élément de réseau d'exécution de surveillance sur le fait de surveiller une communication actuelle ;
un composant de jugement (50), qui est configuré pour juger le fait que les informations d'instruction de surveillance donnent instruction de surveiller la communication actuelle ;
et un composant de surveillance (60), qui est configuré pour surveiller la communication actuelle quand un résultat de jugement du composant de jugement est oui.

15. Dispositif selon la revendication 14, **caractérisé en ce que** le dispositif comprend en outre :
un composant de déchiffrement (70), qui est configuré pour déchiffrer le message qui comprend les informations d'instruction de surveillance et est reçu par le composant de réception pour obtenir les informations d'instruction de surveillance.
